# EUROPEAN PATENT APPLICATION

(11) **EP 1 143 686 A1**
(43) Date of publication of application: **10.10.2001**
(21) Application number: 00970030.3
(22) Date of filing: 24.10.2000
(51) Int. Cl.: H04M 1/00, H04M 1/02

(54) **PORTABLE INFORMATION COMMUNICATION TERMINAL**

(30) Priority: 28.10.1999 JP 30632999
(71) Applicant: MATSUSHITA ELECTRIC INDUSTRIAL CO., LTD., Kadoma-shi, Osaka 571-8501 (JP)
(72) Inventor: NAGAREDA, Shunichiro, Shibuya-ku, Tokyo 150-0011 (JP)
(74) Representative: Grünecker, Kinkeldey, Stockmair & Schwanhäusser Anwaltssozietät
(86) International application number: JP0007423
(87) International publication number: WO0131894

(57) **Abstract**

A portable information communication terminal apparatus adopts the configuration in which a speaker 103 is exposed in a state that an open/close door 107 is closed and a camera 111 is exposed in a state that the open/close door 107 is opened. A switch 108 is pushed into the interior of a housing 101 in a state that the open/close door 107 is closed and it rises at the bottom of a concave portion 110 in a state that the open/close door 107 is opened. A user selects a transmission mode suitable for the quality of transmitting data by opening/closing the open/close door 107 to change the switch 108, thereafter transmitting data suitable for the selected transmission mode.

## Description

### Technical Field

The present invention relates to information communication equipment and particularly to a portable information communication terminal apparatus.

### Background Art

Though the conventional portable communication terminal apparatus has performed speech communications and character data communications, communications including image data are being recently put into practical use.

Herein, since communications using image data need enormous amounts of information as compared with speech communications and character data communications, this is performed by a communication terminal apparatus, which is capable of carrying out high-speed communication and which has a high output.

However, if speech communications and character data communications are performed by the conventional portable communication terminal apparatus with a high output, communications are performed with higher output than the output when is needed to perform speech communications and character data communications, thereby causing a problem in which extra power is consumed.

On other hand, if image communications are performed by the conventional portable communication terminal apparatus with a low output, there is a problem in which much time is required before communications are completed since the amount of information that can be transmitted and received by the hour is small.

### Disclosure of Invention

It is an object of the present invention is to provide a portable information communication terminal apparatus which is capable of performing a long-time call by suppressing power consumption low and which is capable of reducing communication time by transmitting a large amount of information speedily.

This object can be attained by selecting a transmission mode necessary for a user's operation in synchronization with the user's operation.

### Brief Description of Drawings

FIG. 1A is a schematic view illustrating the configuration of a portable information communication terminal apparatus in a low-speed transmission mode according to the first embodiment of the present invention;
FIG. 1B is a schematic view illustrating the configuration of the portable information communication terminal apparatus in a high-speed transmission mode according to the first embodiment of the present invention;
FIG. 2 is a block diagram illustrating the internal configuration of the portable information communication terminal apparatus according to the first embodiment of the present invention;
FIG. 3A is a schematic view illustrating the configuration of a portable information communication terminal apparatus in a low-speed transmission mode according to the second embodiment of the present invention;
FIG. 3B is a schematic view illustrating the configuration of the portable information communication terminal apparatus in a high-speed transmission mode according to the second embodiment of the present invention;
FIG. 3C is a section view illustrating the configuration of the portable information communication terminal apparatus according to the second embodiment of the present invention;
FIG. 3D is a side view illustrating the configuration of the portable information communication terminal apparatus according to the second embodiment of the present invention; and
FIG. 4 is a schematic view illustrating the configuration of the portable information communication terminal apparatus according a third embodiment of the present invention.
Best Mode for Carrying Out the Invention

The following will specifically explain the best mode for carrying out the present invention with reference to the drawings.

### (First embodiment)

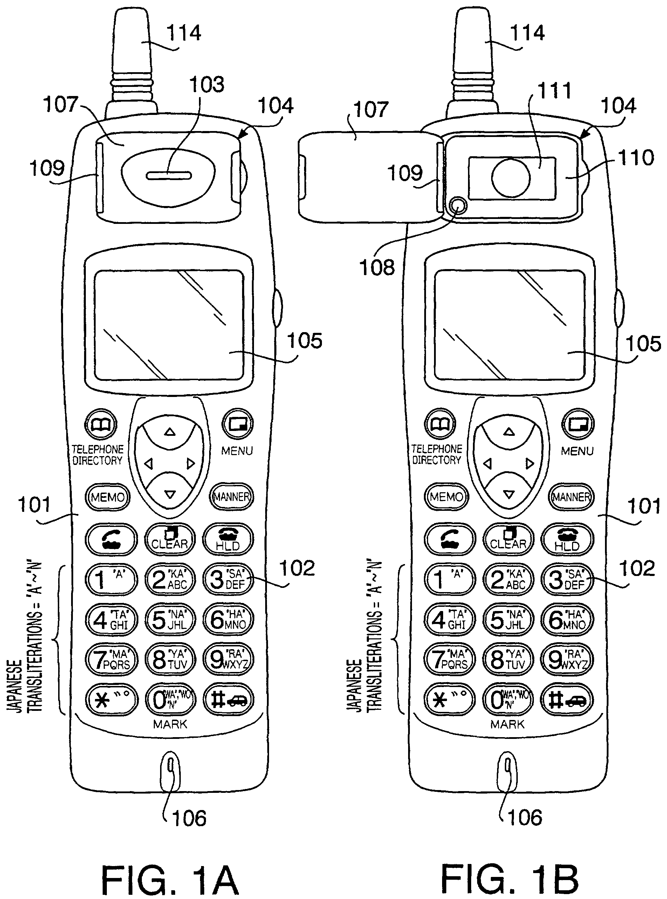

An explanation will be given of the main body of the portable information communication terminal apparatus according to the first embodiment of the present invention with reference to FIG. 1A and FIG. 1B. FIG. 1A is a schematic view illustrating the outline of a portable information communication terminal apparatus in a low-speed transmission mode according to the first embodiment of the present invention, and FIG. 1B is a schematic view illustrating the outline of the portable information communication terminal apparatus in a high-speed transmission mode according to the first embodiment of the present invention.

As illustrated in FIG. 1A and FIG. 1B, on the main surface of a housing 101 having communication equipment units contained, there is formed a switch section 104 composed of a speaker 103, an open/close door 107, a switch 108, a hinge 109, a concave portion 110, and a camera 111 at the upper portion thereof. It is noted that the switch section 104 will be specifically explained later. At the lower portion of the switch section 104, there is formed a display 105 that displays various kinds of information such as a telephone number to be called, an operation menu, and like. At the lower end portion of the main surface, there is formed a microphone 106 for receiving a user's speech.

At the portion between the display 105 and the microphone 106 on the main surface, there is provided a plurality of pushbuttons 102 for operating the present portable in formation communication terminal apparatus. The pushbuttons 102 are mainly used to input a telephone number and characters. Moreover, at the end face positioned upward with respect to the main surface of the housing 101, there is provided an antenna 114 that is extensible and contractible to the housing 101.

Herein, the details on the switching section 104 will be explained. As illustrated in FIG. 1B, the concave portion 110 is formed at the upper portion of the main surface of the housing. Moreover, the open/close door 107, which has the same shape as that of the opening surface of the concave portion 110, is attached to one side of the opening surface to be freely opened/closed through the hinge 109. The user can cover the camera 111 by closing the open/close door 107. Additionally, at the bottom of the concave portion 110, the camera 111 and the switch 108 are formed. Herein, referring to FIG. 1A, the open/close door 107 has the speaker 103 at the surface opposing to the user in a state that the open/close door 107 is closed. Accordingly, the speaker 103 is configured to be exposed in the state that the open/close door 107 is closed, and the camera 111 is configured to be exposed in the state that the open/close door 107 is opened. According to this configuration, either the speaker 103 or the camera 111 can be used by selecting either one of them in an alternative way in accordance with the purpose of the operation. Further, the switch 108 is pushed into the housing 111 in the state that the open/close door 107 is closed, and the switch 108 rises at the bottom surface of the concave portion 110 and functions as a switch in the state that the open/close door 107 is opened. In other words, since the switch is changed in accordance with the open/close of the door, the switch is changed by use of either the speaker 103 or the camera 111.

Additionally, regarding the setting position of the speaker 103 and that of the camera 111, such a configuration may be possible that the camera 111 is set to be exposed onto the upper surface of the housing 101 and the speaker 103 is set at the bottom of the concave portion 110 in the state that the open/close door is closed.

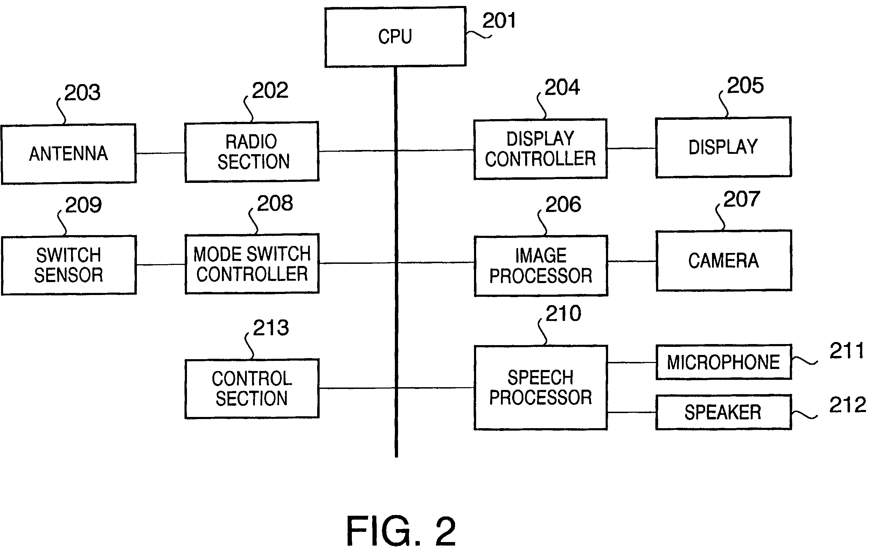

FIG. 2 is a block diagram illustrating the internal configuration of the portable information communication terminal apparatus according to the first embodiment of the present invention. The internal configuration of the portable information communication terminal apparatus according to this embodiment will be explained with reference to FIG. 2.

A CPU 201 illustrated in this figure controls the respective processing sections such as a radio section 202, a display controller 204, an image processor, a mode switch controller 208, a speech processor 210, and the like. The radio section 202 provides radio processing to signals that the antenna 203 receives from a base station (not shown), and also provides radio processing to signals sent from the respective processing sections and transmits the resultant to the base station via the antenna 203. The display controller 204 provides display processing to the signals sent from the respective processing sections or CPU 201 and displays various kinds of information on the display 205. The image processor 206 provides predetermined processing such as compression, modulation, and the like to an image signal captured by a camera 207. The camera 207 herein refers to image pickup means for capturing the image signal. The mode switch controller 208 provides predetermined processing to a selection signal sent from a switch sensor 209 and selects a high-speed transmission mode with a relatively high transmission rate or a low-speed transmission mode with a relatively low transmission rate, and changes the set transmission mode to the selected transmission mode as a transmission mode of the portable in formation communication terminal apparatus according to this embodiment. It is noted that the transmission rate in the low-speed transmission mode is set to be higher than the transmission rate in the high-speed transmission mode. The speech processor 210 provides predetermined processing such as modulation and the like to a speech signal captured by a microphone 211 and provides predetermined processing to the selection signal sent from the radio section 202, and outputs a speech from a speaker 212. A control section 213 outputs a signal corresponding to the operation inputted by the user to the CPU 21 and the like.

Herein, the operation of the mode switch controller 208 will be specifically explained. The mode switch controller 208 selects the high-speed transmission mode as a transmission mode or the low-speed transmission mode based on the selection signal sent from the switch sensor 209, and changes the set transmission mode to the selected transmission mode. In the high-speed transmission mode, transmission and reception of data for high transmission and output having a large amount of information (for example, image data, video data, or enormous amounts of speech data or character data) are performed. The transmission rate in the high-speed transmission mode is, for example, 64 kbps, and the output is, for example, 24 dbm. On the other hand, in the low-speed transmission mode, transmission and reception of data for low transmission and output whose amount of information is smaller than data for high transmission and output (for example, normal speech data and normal character data) are performed. The transmission rate in the low-speed transmission mode is, for example, 16 kbps, and the output is, for example, 21 dbm.

The switch 108 comes in contact with a conductor that forms a part of an electronic circuit provided in the housing 101 when being pushed into the housing 101. The contact/non-contact of the switch 108 with the conductor changes a current flowing into the electronic circuit, and the selection signal for selecting the transmission mode is sent to the mode switch controller 208 from the switch sensor 209. Namely, the selection signal is generated according to the open/close of the open/close door 107, and is sent to the mode switch controller 208 from the switch sensor 209. This selection signal is a signal for selecting the low-speed transmission mode in the stat that the open/close door 107 is closed, and a signal for selecting the high-speed transmission mode in the stat that the open/close door 107 is opened.

Herein, the operation of the above-configured portable information communication terminal apparatus will be specifically explained with reference to FIG. 1A, FIG. 1B, and FIG.2. The explanation herein is given based on an example of a case in which communications are performed using either data for high transmission output or data for low transmission output.

In the case of transmitting data for high transmission output as communication data, the user selects a high-speed transmission mode and transmits the high-speed transmission data. In this case, the user first opens the open/close door 107 to obtain a state that the camera 111 is exposed. When the open/close door 107 is opened, the switch 108 rises at the bottom of the concave portion 110, and the selection signal for selecting the high-speed transmission mode as a transmission mode is sent to the mode switch controller 208.

The mode switch controller 208 performs processing for changing the transmission mode to the high-speed transmission mode upon receipt of the above selection signal when the transmission mode just before receiving the signal is the low-speed transmission mode. It is noted that mode change processing is not performed when the transmission mode just before receiving the signal is already the high-speed transmission mode. Thus, the selection of the high-speed transmission mode is ended.

In the case of performing communications using transmitting data for low transmission output as communication data, the user selects a low-speed transmission mode and transmits the low-speed transmission data. In this case, the user first closes the open/close door 107 to obtain a state that the speaker 103 is exposed onto the upper surface of the housing 101. When the open/close door 107 is closed, the switch 108 is pushed in the internal direction of the housing, and the selection signal for selecting the high-speed transmission mode as a transmission mode is sent to the mode switch controller 208.

The mode switch controller 208 performs processing for changing the transmission mode to the low-speed transmission mode upon receipt of the above selection signal when the transmission mode just before receiving the signal is the high-speed transmission mode. It is noted that mode change processing is not performed when the transmission mode just before receiving the signal is already the low-speed transmission mode. Thus, the selection of the low-speed transmission mode is ended.

After the selection of transmission mode is ended, a calling operation is next performed. The user inputs a telephone number by pushing suitable pushbuttons 102, and then pushes a transmission button assigned to any one of pushbuttons 102. By the above operation, pushing information is sent to the CPU 201.

The CPU 201 performs control on the sending operation when receiving the pushing information, so that control signals for performing sending processing, image communication processing, and calling processing are transmitted to the radio section 202, image processor 206, and speech processor 210 respectively based on the selected telephone number.

As a result, sending processing is performed at the radio section 202 and image communication processing and calling processing are carried out at the radio section 202, image processor 206, and speech processor 210. The user can perform image communication using the camera 111 and a call (speech communication) using the microphone 106 and speaker 103.

Additionally, though the above embodiment has explained only communications using image and speech, the present invention is not limited to this. The present portable information terminal apparatus having character inputting means and character data processing means can selectively perform character communications. Moreover, the present portable information terminal apparatus having data inputting means and data processing means other than the above can selectively perform communications using the above data.

Thus, in the case of performing communications using the portable information communication terminal according to this embodiment of the present invention, transmission can be carried out after selecting the transmission mode suitable for the amount of transmitting data by opening/closing the open/close door 107.

Accordingly, at the time of transmitting data for low transmission and output, transmission is performed in the low-speed transmission mode so that power consumption can be suppressed low, allowing a long-time call. Also, at the time of transmitting data for high transmission and output, transmission is performed in the high-speed transmission mode, so that time required for communications can be reduced and the comfortable operation can be performed.

### (Second embodiment)

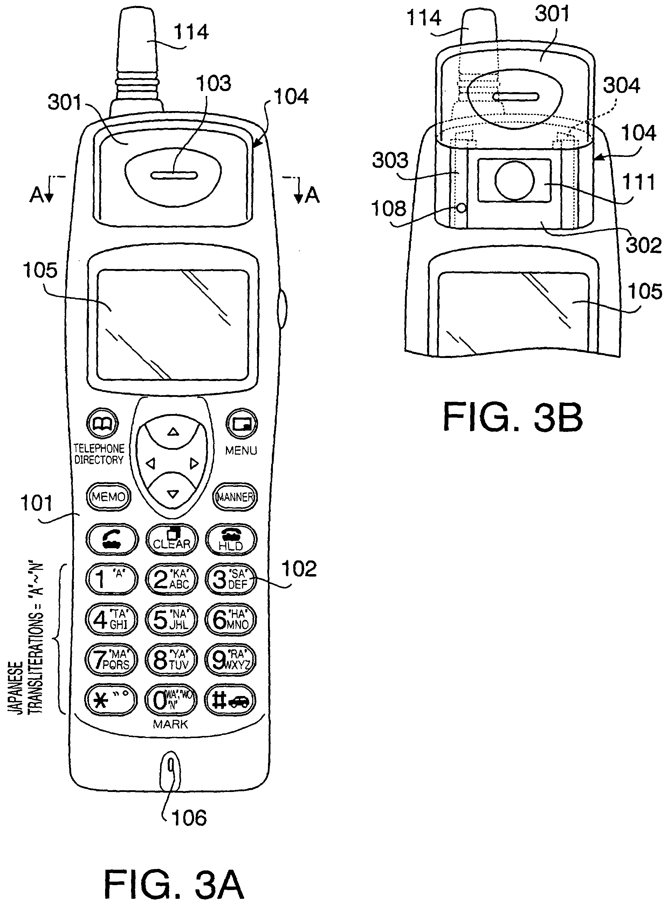

The second embodiment is one in which the configuration of the switch section 104 of the first embodiment is changed such that the change in the switching is carried out using a slide panel, and the basic configuration of the portable information communication terminal apparatus is the same as that of the first embodiment. Additionally, regarding the same sections as those of the first embodiment, the same reference marks as those of FIG. 1 an FIG.2 are added to the corresponding sections of FIG. 3A to FIG. 3D, and the specific explanation is omitted. The following explains the points different from the first embodiment concerning the portable information communication apparatus of this embodiment with reference to FIG. 3A to FIG. 3D.

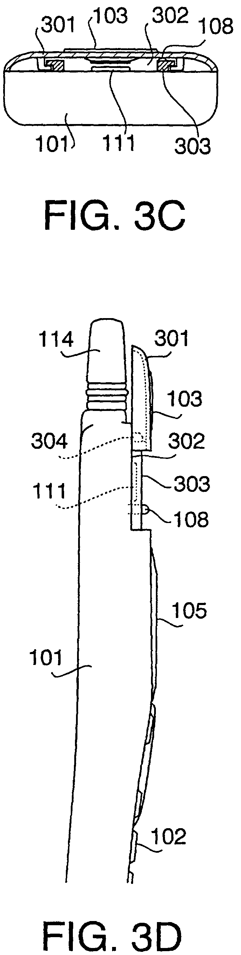

FIG. 3A is a schematic view illustrating the outline of the portable information communication terminal apparatus in the low-speed transmission mode according to the second embodiment of the present invention, and FIG. 3B is a schematic view illustrating the outline of the portable information communication terminal apparatus in the high-speed transmission mode according to the second embodiment of the present invention. FIG. 3C is a sectional view taken along line A-A of the portable information communication terminal apparatus illustrated in FIG. 3A, and FIG. 3D is a side view of the portable information communication terminal apparatus illustrated in FIG. 3B.

According to FIG. 3A and FIG. 3B, the switch section 104 comprises a slide panel 301 slidably formed on the main surface of the housing 101, a speaker 103 formed on the surface opposite to the user of the slide panel 301, a rail member 303 formed at the bottom surface of the surface (hereinafter refereed to as "lower surface") formed to be lower than the main surface by one step in parallel with the main surface of the housing 101, a camera 111 provided at the lower surface, a stopper 304 formed at the upper end of the rail member 303 to prevent the slide panel 301 from being detached from the housing 101, and a switch 108 provided on the rail member 303.

Herein, the slide panel 301 is formed to be fitted into the housing 101 through the rail member 303, and slides in parallel with the main surface of the housing 101 in the longitudinal direction thereof.

Since the camera 111 is exposed only when the slide panel 301 is displaced in the direction of the antenna 114, the use of the speaker 103 or that of camera 111 is configured such that either one of them is selected in an alternative way in accordance with the purpose of the operation.

Moreover, the displacement of the slide panel 301 makes it possible to change the switch 108 provided on the rail. Namely, in the case where the slide panel 301 is in the closed state, the switch 108 is pushed in the internal direction of the housing 101. On the other hand, in the case where the slide panel 301 is in the opened state, the switch 108 rises to change the switch. By the change in the switch, the selection signal that selects the transmission mode is transmitted to the mode switch controller 208 similar to the first embodiment. Namely, in the state that only the speaker 103 is exposed, the selection signal, which selects the low-speed transmission mode as a transmission mode, is transmitted to the mode switch controller 208. In the state that the camera 111 is exposed, the selection signal, which selects the high-speed transmission mode as a transmission mode, is transmitted to the mode switch controller 208. After the signal is transmitted to the mode switch controller 208, the same operation as that of the first embodiment is carried out.

Additionally, regarding the setting position of the speaker 103 and that of the camera 111, in the state that the slide panel 301 is closed, such a configuration may be possible that the camera 111 is set to be exposed onto the main surface of the housing 101 and the speaker 103 is set at the bottom of the lower portion 302. Moreover, though the above embodiment has explained the configuration in which the switch 108 is formed on the rail member 303, the present invention is not limited to this, and the switch 108 can be provided at a switchable position by sliding the slide panel 301.

Thus, in the case of performing communications using the portable information communication terminal according to this embodiment of the present invention, transmission can be carried out after selecting the transmission mode suitable for the amount of transmitting data sliding the sliding panel 301.

Accordingly, at the time of transmitting data for low transmission and output, transmission is performed in the low-speed transmission mode so that power consumption can be suppressed low, allowing a long-time call. Also, at the time of transmitting data for high transmission and output, transmission is performed in the high-speed transmission mode so that time required for communications can be reduced. Resultantly, the comfortable operation can be performed.

### (Third embodiment)

The second embodiment is one in which the configuration of the switch section 104 of the first embodiment is changed such that the selection signal is outputted by a switch sensor 209 in accordance with the detection of the presence or absence of an object due to a proximity sensor.

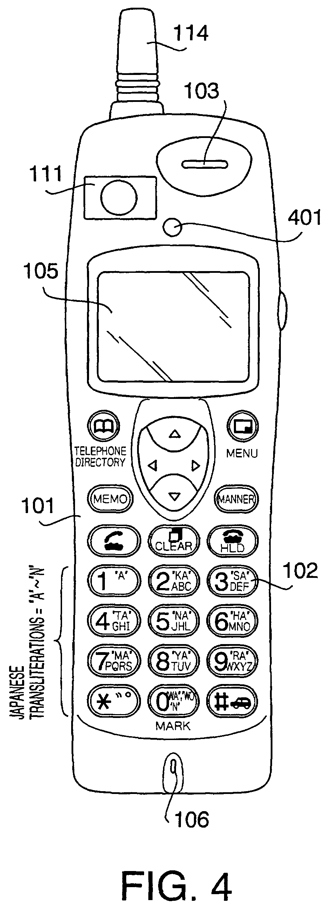

The proximity sensor herein refers to means for detecting that the object comes near the housing 101. The basic configuration of the portable information communication terminal apparatus is the same as that of the first embodiment. Additionally, regarding the same sections as those of the first embodiment, the same reference marks as those of FIG. 1 are added to the corresponding sections of FIG. 4 and the specific explanation is omitted. The following explains the points different from the first embodiment concerning the portable information communication apparatus of this embodiment with reference to FIG. 4.

In the same figure, the switch section 104 has a proximity sensor 401 provided on the main surface of the housing 101. On the main surface of the housing 101, the speaker 103 and the camera 111 are also provided.

Herein, the proximity sensor 401 in jects detection light to the object from a light-emitting section (not shown) and receives a reflected light reflected by the object, thereby detecting the distance from the object. The detection range of the proximity 401 is set to some distance between the temporal of a human being and the main surface of the housing 101 generated when the normal calling operation is performed. Then, in the case where the sensor detects the object at an operation time, the selection signal that selects the low-speed transmission mode as a transmission mode is generated by the switch sensor 209, and the generated selection signal is sent to the mode switch controller 208. The mode switch controller 208 selects the low-speed transmission mode based on the selection signal. While, in the case where the sensor detects no object at an operation time, the selection signal that selects the high-speed transmission mode as a transmission mode is generated by the switch sensor 209, and the generated selection signal is sent to the mode switch controller 208. The mode switch controller 208 selects the high-speed transmission mode based on the selection signal.

Accordingly, since the head portion is positioned within the detection range at the calling time, the low-speed transmission mode is selected as a transmission mode. While, in the case of performing communications using an image, since the camera 111 and the display 105 are used and the object does not exist within the detection range, the high-speed transmission mode is selected as a transmission mode.

Thus, according to this embodiment, in the case of performing a call (speech communication), the low-speed transmission mode is selected to allow power consumption to be suppressed low, thereby making it possible to perform a long-time call. While, in the case of transmitting image data, since communications can be performed using the high-speed transmission mode, time required for communications can be reduced, with the result that the comfortable operation can be performed.

In addition, this embodiment has explained only the case in which the proximity sensor is used as means for detecting that the object comes near the housing 101. However, the present invention is not limited to this, and it is possible to use other means that can detect that the object comes near the housing 101.

As explained above, according to the present invention, the transmission mode that is capable of performing transmission with an output corresponding to transmission data is selected in accordance with the user's operation, so that power consumption can be suppressed low to perform a long-time call and a large amount of information can be transmitted speedily to reduce communication time.

This application is based on the Japanese Patent Application No.HEI 11-306329 filed on October 28, 1999, entire content of which is expressly incorporated by reference herein.

### Industrial Applicability

The present invention is suitable for use in information communication equipment, particularly the field of the portable information communication terminal apparatus.

## Claims

1. A portable information communication terminal apparatus comprising;
a housing having a radio communication unit built-in;
image pickup means provided on a main surface of said housing;
an open/close door, which is provided on the main surface of said housing, for covering or exposing said image pickup means;
a speaker provided at said open/close door; and
mode switching means for switching a high-speed data transmission mode with high output power and a low-speed transmission mode with low output power by opening/closing said open/close door.

2. A portable information communication terminal apparatus comprising;
a housing having a radio communication unit built-in;
image pickup means provided on a main surface of said housing;
a slide panel, which is slidably provided on the main surface of said housing, for covering or exposing said image pickup means;
a speaker provided at said slide panel; and
mode switching means for switching a high-speed data transmission mode with high output power and a low-speed transmission mode with low output power by opening/closing said slide panel.

3. A portable information communication terminal apparatus comprising;
a housing having a radio communication unit built-in;
detecting means, which is provided on a main surface of said housing, for detecting that an object comes near said housing; and
mode switching means for switching a high-speed data transmission mode with high output power and a low-speed transmission mode with low output power by a signal outputted from said detecting means.
